(19) **Europäisches Patentamt / European Patent Office / Office européen des brevets**

(11) **EP 3 208 492 B1**

(12) **EUROPEAN PATENT SPECIFICATION**

(45) Date of publication and mention
of the grant of the patent:
**10.04.2019 Bulletin 2019/15**

(21) Application number: **15851005.7**

(22) Date of filing: **30.09.2015**

(51) Int Cl.:
**F16F 15/08** (2006.01)     **B60K 1/00** (2006.01)

(86) International application number:
**PCT/JP2015/078415**

(87) International publication number:
**WO 2016/060032 (21.04.2016 Gazette 2016/16)**

(54) **ANTI-VIBRATION DEVICE**

SCHWINGUNGSDÄMPFUNGSVORRICHTUNG

DISPOSITIF D'AMORTISSEMENT DES VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2014 JP 2014212843**

(43) Date of publication of application:
**23.08.2017 Bulletin 2017/34**

(73) Proprietor: **Bridgestone Corporation
Tokyo 104-8340 (JP)**

(72) Inventors:
• **SATAKE, Yuki
Tokyo 104-8340 (JP)**
• **WATAI, Hirokazu
Tokyo 104-8340 (JP)**
• **UEKI, Akira
Tokyo 104-8340 (JP)**

(74) Representative: **Oxley, Robin John George
Marks & Clerk LLP
90 Long Acre
London WC2E 9RA (GB)**

(56) References cited:
FR-A1- 2 523 678      JP-A- H0 394 155
JP-A- H08 338 467     JP-A- 2000 029 615
JP-A- 2002 159 085    JP-A- 2004 084 936
JP-A- 2004 084 936    US-A- 1 822 026
US-A1- 2007 090 269

• **Onda Corp.: "Acoustic Properties of Rubbers Ref
Material Vendor V L mm/:s", , 11 April 2003
(2003-04-11), XP055415635, Retrieved from the
Internet:
URL:http://www.ondacorp.com/images/Rubbers
.pdf [retrieved on 2017-10-13]**
• **As Onda Corp. ET AL: "Acoustic Properties of
Solids Ref Material Vendor VL mm/:s VS mm/:s", ,
11 April 2003 (2003-04-11), page 17, XP055415639,
Retrieved from the Internet:
URL:http://www.ondacorp.com/images/Solids.
pdf [retrieved on 2017-10-13]**

EP 3 208 492 B1

**Description**

TECHNICAL FIELD

This disclosure relates to an anti-vibration device.

BACKGROUND

As a conventional anti-vibration device, exemplified is one comprising: a vibration system having two intermediate members connected to each other via a plurality of elastic bodies between an internal cylinder and an external cylinder, so as to form a double anti-vibration structure by using these intermediate members as intermediate mass; and a vibration system having two fluid chambers connected to each other via an orifice path formed between the internal cylinder and the external cylinder, so as to form a fluid insulator functioning as a liquid damper (see, e.g., PTL1). Reference is also made to US 2007/090269 which discloses a suspension system for suspending an apparatus.

CITATION LIST

Patent Literature

PTL1: JP2000046098A

SUMMARY

(Technical Problem)

According to the aforementioned anti-vibration device, low frequency vibration is absorbed by the vibration system forming the fluid insulator, and high frequency vibration is absorbed via resonance of the intermediate mass (the two intermediate members) of the vibration system forming the double anti-vibration structure.
However, the aforementioned anti-vibration device uses an intermediate mass formed of two intermediate members, and thus has a problem of increase of the weight of the entire anti-vibration device.
This disclosure is to provide a novel anti-vibration device capable of reducing high frequency vibration.

(Solution to Problem)

The anti-vibration device according to this disclosure is an anti-vibration device comprising: elastic bodies into which vibration is input; and an intermediate plate arranged between the elastic bodies in a manner crossing a vibration input direction and connected to the elastic bodies, wherein the intermediate plate has an acoustic impedance larger than the elastic bodies, and a perpendicular line of the intermediate plate is arranged between the elastic bodies in a manner inclined with respect to the vibration input direction at an angle $\theta_1$ ($0°<\theta_1<90°$), characterized in that the intermediate plate (5) has a damping ratio of 0.02 or more.
The anti-vibration device according to this disclosure is capable of reducing high frequency vibration.

(Advantageous Effect)

According to this disclosure, it is possible to provide a novel anti-vibration device capable of reducing high frequency vibration.

BRIEF DESCRIPTION OF THE DRAWINGS

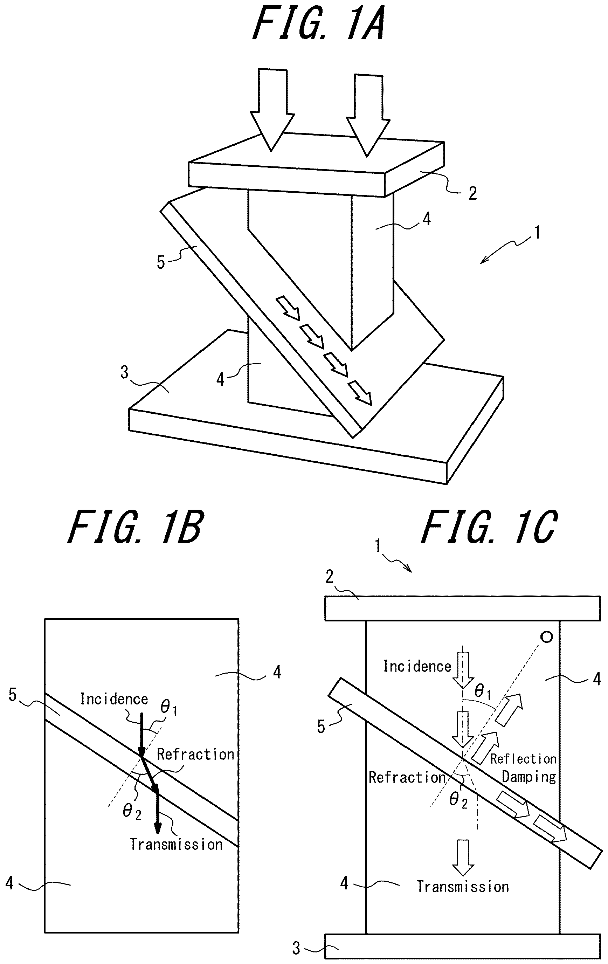

FIG. 1A is a perspective view schematically illustrating the anti-vibration device according to an embodiment of this disclosure, FIG. 1B is a schematic view for illustrating the correlation of the elastic bodies and the intermediate plate of the anti-vibration device as shown in FIG. 1A, and FIG. 1C is a schematic view showing the effect of the anti-vibration device as illustrated in FIG. 1A;

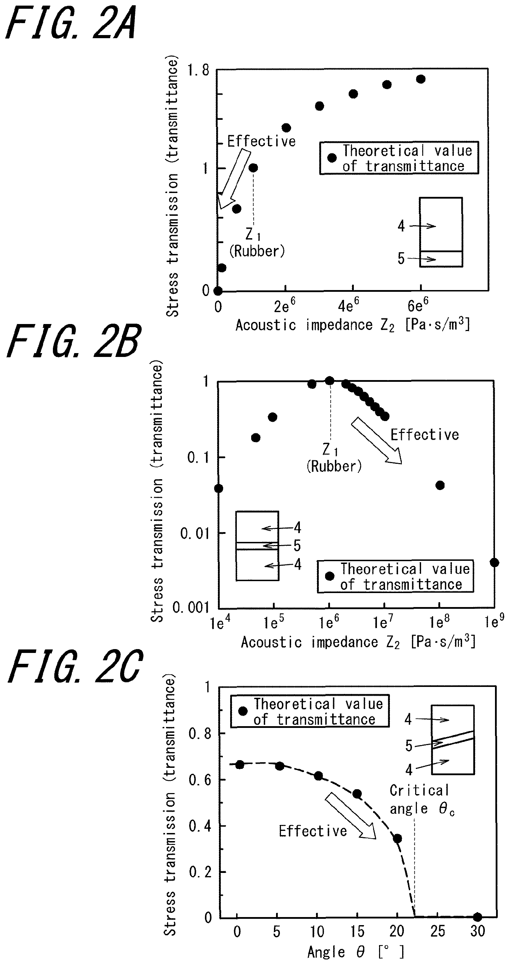

FIG. 2A is a graph showing the correlation of the acoustic impedance of the intermediate plate and the stress transmission (theoretical value of transmittance) when the intermediate plate is arranged on one vibration input/output end of an elastic body, FIG. 2B is a graph showing the correlation of the acoustic impedance of the intermediate plate and the stress transmission (theoretical value of transmittance) when the intermediate plate is arranged between the elastic bodies parallel to mounting members, and FIG. 2C is a graph showing the correlation of the angle of the elastic bodies and the stress transmission (theoretical value of transmittance) when the intermediate plate is arranged inclined between the elastic bodies;

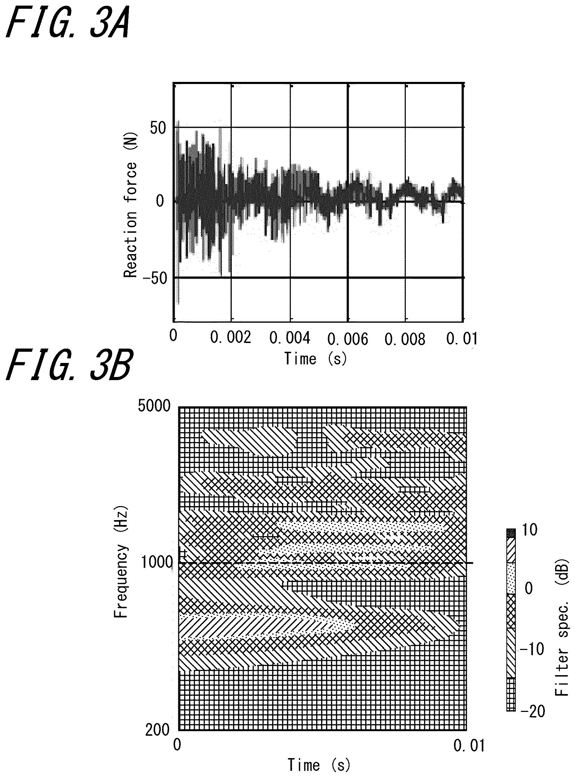

FIGS. 3A-3B show the results obtained by performing analysis via finite element method (FEM) to the anti-vibration device as illustrated in FIG. 1A, when the damping ratio of the intermediate plate is set to zero and impact is applied, where FIG. 3A is a graph obtained via transient response analysis on the reaction force transmitted to the output side of the anti-vibration device, and FIG. 3B is a graph obtained via transient response analysis on the frequency of the vibration transmitted to the output side of the anti-vibration device;

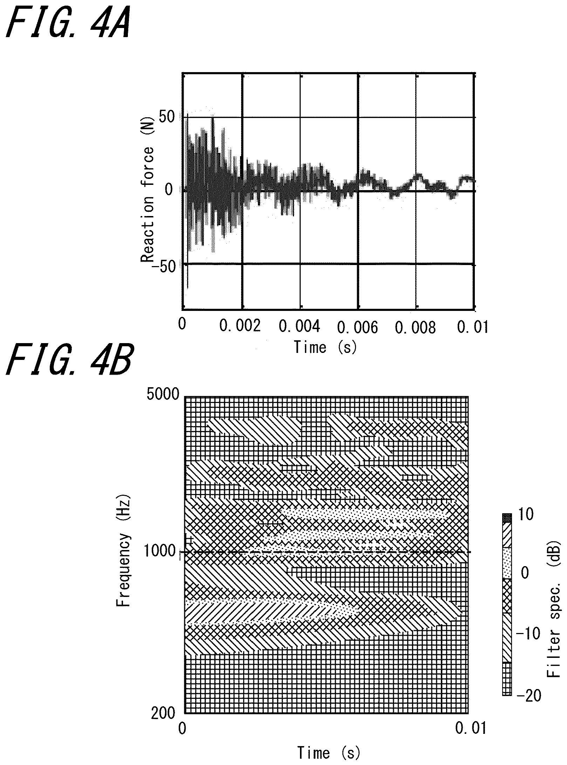

FIGS. 4A-4B show the results obtained by performing analysis via FEM to the anti-vibration device as illustrated in FIG. 1A, when the damping ratio of the intermediate plate is set to 0.0005 and impact is applied, where FIG. 4A is a graph obtained via transient response analysis on the reaction force transmitted to the output side of the anti-vibration device, and FIG. 4B is a graph obtained via transient response analysis on the frequency of the vibration transmitted to the output side of the anti-vibration device;

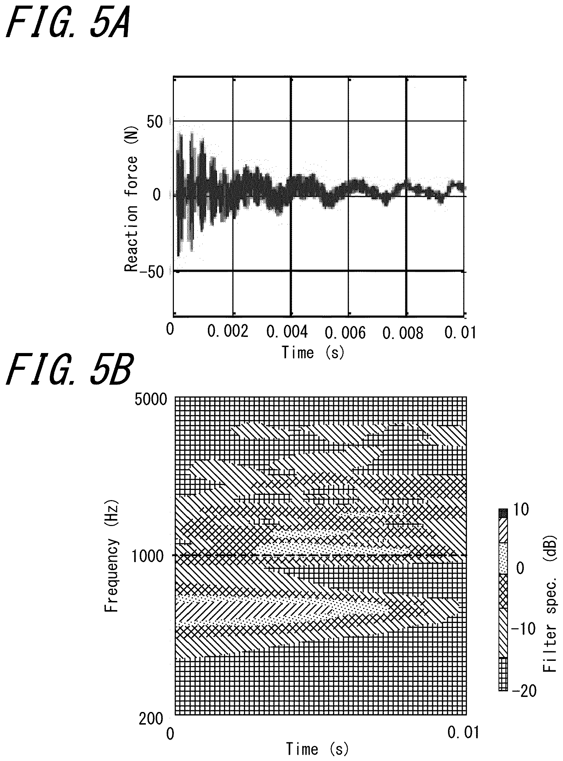

FIGS. 5A-5B show the results obtained by performing analysis via FEM to the anti-vibration device as illustrated in FIG. 1A, when the damping ratio of the intermediate plate is set to 0.02 and impact is applied, where FIG. 5A is a graph obtained via transient response analysis on the reaction force transmitted to the output side of the anti-vibration device, and FIG. 5B is a graph obtained via transient response analysis on the frequency of the vibration transmitted to the output side of the anti-vibration device;

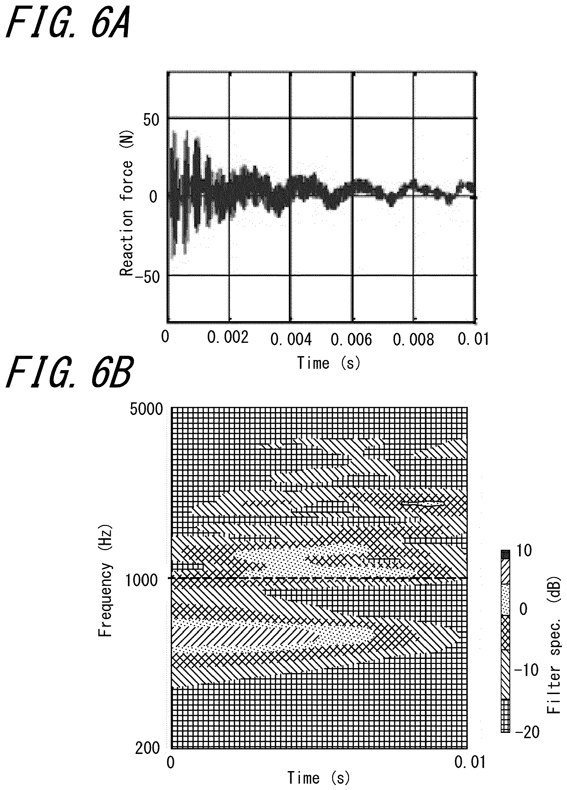

FIGS. 6A-6B show the results obtained by performing analysis via FEM to the anti-vibration device as illustrated in FIG. 1A, when the damping ratio of the intermediate plate is set to 0.1 and impact is applied, where FIG. 6A is a graph obtained via transient response analysis on the reaction force transmitted to the output side of the anti-vibration device, and FIG. 6B is a graph obtained via transient response analysis on the frequency of the vibration transmitted to the output side of the anti-vibration device;

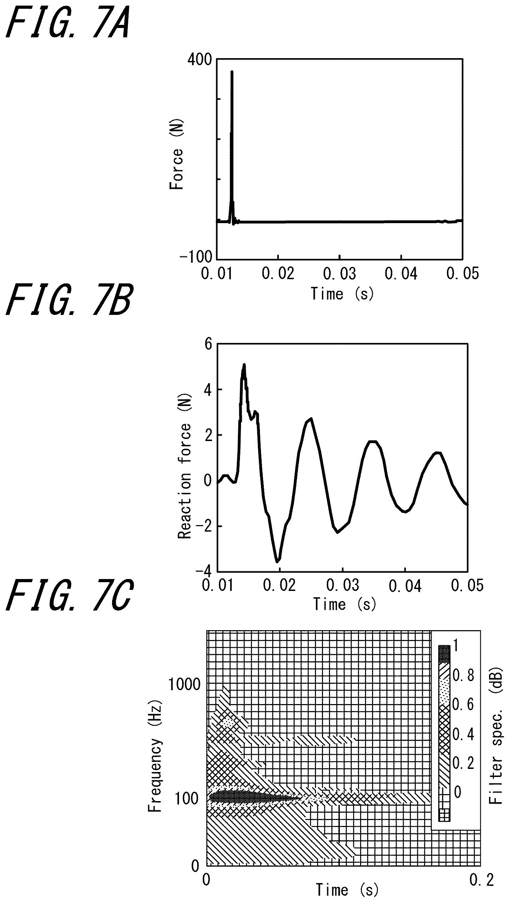

FIGS. 7A-7C show the experimental results when impact is applied to a first mounting member in Example 1, where the intermediate plate of the anti-vibration device as illustrated in FIG. 1A is made of bakelite, and is arranged at an angle $\theta_1 = 45°$, where FIG. 7A is a graph obtained by measuring the change over time of the impact force input into Example 1, FIG. 7B is a graph obtained by measuring the change over time of the reaction force transmitted to the output side of Example 1, and FIG. 7C is a graph obtained by performing transient response analysis to the frequency of the vibration transmitted to the output side of Example 1; and

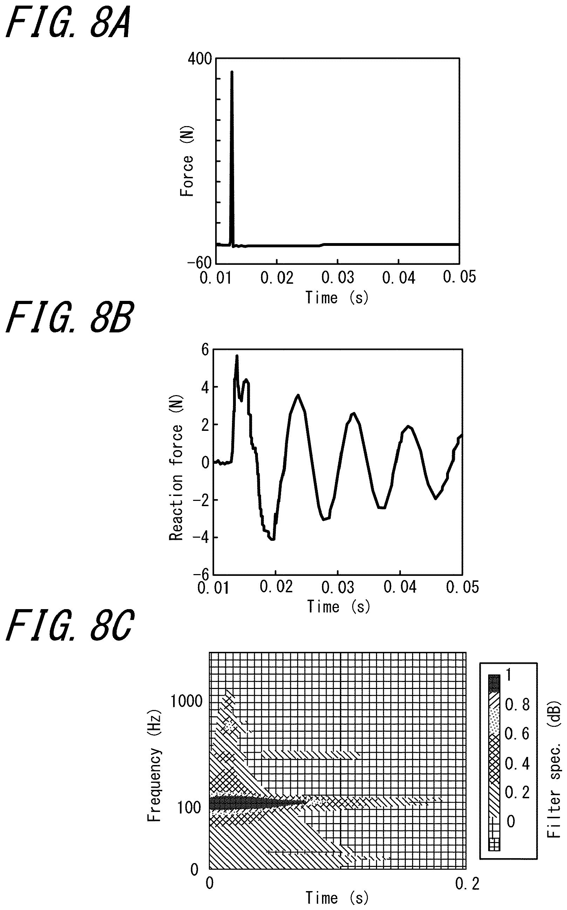

FIGS. 8A-8C show the experimental results when impact is applied to the first mounting member in Comparative Example 1, where the first and a second mounting members are connected merely via an elastic body, where FIG. 8A is a graph obtained by measuring the change over time of the impact force input into Comparative Example 1, FIG. 8B is a graph obtained by measuring the change over time of the reaction force transmitted to the output side of Comparative Example 1, and FIG. 8C is a graph obtained by performing transient response analysis to the frequency of the vibration transmitted to the output side of Comparative Example 1.

## DETAILED DESCRIPTION

In the following, an anti-vibration device according to an embodiment of this disclosure is described in details by referring to the drawings. In the following description, the vertical direction in the drawings is the vertical direction, and the upper side and the lower side in the drawings are respectively referred to as merely the upper side and the lower side.

In FIG. 1A, reference sign 1 is an anti-vibration device according to an embodiment of this disclosure. The anti-vibration device 1 is used in a vibration transmission system having a vibration generation unit for generating high frequency vibration of, e.g., 1000 Hz or more, and particularly 1500 Hz or more, and a vibration reception unit for receiving its vibration. In the vibration transmission system of the present embodiment is, exemplarily, a motor is the vibration generation unit, and a vehicle body (chassis) is the vibration reception unit. Moreover, in the present embodiment, for sake of easiness of description, merely the vibration generated in the vertical direction is considered.

Reference sign 2 is a first mounting member mounted to one member for forming the vibration transmission system. In the present embodiment, the first mounting member 2 is a member for mounting, e.g., an electric motor. The first mounting member 2 is exemplified as metallic members made of iron, etc. Reference sign 3 is a second mounting member mounted to another member for forming the vibration transmission system. The second mounting member 3 is exemplified as members for mounting the vehicle body. The second mounting member 3 is exemplified as metallic members made of iron, etc. In the present embodiment, the first mounting member 2 and the second mounting member 3 are arranged parallel to each other in a direction orthogonal to the vertical direction.

The reference signs 4 are elastic bodies into which vibration is input. The elastic bodies 4 are exemplified as ones made of resins such as rubber and the like. The first mounting member 2 and the second mounting member 3 are

3

respectively connected via adhesion, etc., to the upper ends and the lower ends of the elastic bodies 4. In the present embodiment, the elastic bodies 4 are made into a rectangular prism shape. Here, the shape of the elastic bodies 4 are not limited to rectangular prism shape.

The reference sign 5 is an intermediate plate arranged between the elastic bodies 4 in a manner crossing the vibration input direction (the vertical direction in the present embodiment), and connected to the elastic bodies. The intermediate plate 5 is exemplified as those made of general-purpose resins such as bakelite, polyethylene and the like. The intermediate plate 5 is connected to the elastic bodies 4 via an adhesive, or via vulcanization adhesion. In the present embodiment, the intermediate plate 5 is shaped into a rectangular flat plate. Here, the shape of the intermediate plate 5 is not limited to rectangular flat plate as long as one which can be arranged in a manner crossing between the elastic bodies 4.

Here, the high frequency vibration has wave nature. Here, in the present embodiment, as described below, the high frequency vibration is caught as an elastic wave, and its wave nature is used to reduce the reaction force transmitted to the vehicle body side.

First, in the present embodiment, the intermediate plate 5 has an acoustic impedance $Z_2$ larger than the acoustic impedance $Z_1$ of the elastic bodies 4 ($Z_1 < Z_2$). In this case, as mentioned below, since the acoustic impedance $Z_2$ of the intermediate plate 5 is larger than the acoustic impedance $Z_1$ of the elastic bodies 4, the stress transmission from the first mounting member 2 to the second mounting member 3 can be suppressed as a small value.

The acoustic impedance $Z_1$ of the elastic bodies 4 and the acoustic impedance $Z_2$ of the intermediate plate 5 can be respectively calculated according to the following formula (1) and formula (2).

$$Z_1 = \rho_1 \cdot c_1 = (\rho_1 \cdot E_1)^{1/2} \qquad \cdots (1)$$

$\rho_1$ : density of the elastic bodies 4, $c_1$ : sound velocity in the elastic bodies 4, $E_1$ : elastic modulus of the elastic bodies 4

$$Z_2 = \rho_2 \cdot c_2 = (\rho_2 \cdot E_2)^{1/2} \qquad \cdots (2)$$

$\rho_2$ : density of the intermediate plate 5, $c_2$ : sound velocity in the intermediate plate 5, E2 : elastic modulus of the intermediate plate 5

Next, in the present embodiment, as illustrated in FIG. 1B, the intermediate plate 5 is arranged between the elastic bodies 4, in a manner such that a perpendicular line O of the intermediate plate 5, i.e., a perpendicular line O dropped on an outer surface on the vibration input side of the intermediate plate 5, is inclined with respect to the vibration input direction (the vertical direction in the present embodiment) at an angle $\theta_1$ ($0° < \theta_1 < 90°$). In this case, as mentioned below, the stress transmission from the first mounting member 2 to the second mounting member 3 is suppressed at a low value as the angle $\theta_1$ is enlarged.

Further, the stress transmission from the first mounting member 2 to the second mounting member 3 can be expressed as a theoretical value T of transmittance of elastic wave in the existence of the intermediate plate 5 (hereinafter referred to as merely "the theoretical value T of transmittance"). The theoretical value T of transmittance can be calculated according to the following formula (3).

$$T = (2 \cdot Z_2 \cdot \cos\theta_1) / (Z_2 \cdot \cos\theta_1 + Z_1 \cdot \cos\theta_2) \qquad \cdots (3)$$

$$\cos\theta_2 = [1 - \sin^2\theta_2]^{1/2} \qquad \cdots (4)$$

$$\sin\theta_2 = (c_2 \cdot \sin\theta_1) / c_1 \qquad \cdots (5)$$

Namely, the anti-vibration device 1 according to the present embodiment is to reduce the theoretical value T of transmittance, by controlling the acoustic impedances $Z_1$, $Z_2$, and setting the angle $\theta_1$ of the intermediate plate 5 to an optimum angle corresponding to the acoustic impedances $Z_1$, $Z_2$.

Here, the FIG. 2A is a graph showing the correlation of the acoustic impedance $Z_2$ of the intermediate plate 5 and the stress transmission (the theoretical value T of transmittance), when the intermediate plate 5 is arranged on merely one vibration input/output end of the elastic bodies 4, to form an anti-vibration device of a double-layer structure.

In FIG. 2A, the intermediate plate 5 is connected to the lower end of an elastic body 4. In the case of an anti-vibration device of a double-layer structure in which the intermediate plate 5 is connected to the lower end of the elastic body 4, as illustrated in FIG. 2A, the stress transmission from the first mounting member 2 to the second mounting member 3 is suppressed to a small value as the acoustic impedance $Z_2$ of the intermediate plate 5 is reduced. However, in the case of FIG. 2A, in order to set the theoretical value T of transmittance less than 1, it is necessary that $Z_2>Z_1$. However, as for rubbers, since $Z_1=1e^6(\equiv1\times10^6)[Pa\cdot s/m^3]$, it is ordinarily impossible to find appropriate materials with an acoustic impedance Z less than this value. Therefore, an anti-vibration device with a double-layer structure as illustrated in FIG. 2A is inappropriate.

Regarding this, FIG. 2B is a graph showing the correlation of the acoustic impedance $Z_2$ of the intermediate plate 5 and the stress transmission (the theoretical value T of transmittance), when the intermediate plate 5 is arranged between the elastic bodies 4, to form an anti-vibration device of a triple-layer structure.

In FIG. 2B, the intermediate plate 5 is arranged horizontally in a manner orthogonal to the vibration input direction (in this case, the vertical direction), i.e., the perpendicular line O of the intermediate plate 5 is identical (parallel) to the vibration input direction. As illustrated in FIG. 2B, the stress transmission from the first mounting member 2 to the second mounting member 3 is suppressed to a small value as the acoustic impedance $Z_2$ of the intermediate plate 5 is larger than the acoustic impedance $Z_1$ of the elastic bodies 4 (e.g., rubber).

FIG. 2C is a graph showing the correlation of the angle $\theta_1$ of the perpendicular line O of the intermediate plate 5 to the vibration input direction (the vertical direction) and the stress transmission (the theoretical value T of transmittance), when the intermediate plate 5 is arranged between the elastic bodies 4 to form an anti-vibration device of a triple-layer structure. In FIG. 2C, the theoretical value T of transmittance was calculated, where the elastic bodies 4 are made of rubber, and the intermediate plate 5 is made of epoxy resin.

As illustrated in FIG. 2C, the stress transmission from the elastic bodies 4 on the upper side through the intermediate plate 5 to the lower side is suppressed to a small value as the angle $\theta_1$ is enlarged. When the angle $\theta_1$ approaches a critical angle $\theta_c$, the stress transmission becomes zero. Namely, the critical angle $\theta_c$ refers to a total reflection when the input vibration is caught as an elastic wave. If the materials of the elastic bodies 4 and the intermediate plate 5 are determined, the critical angle $\theta_c$ can be calculated according to, e.g., the formula (5) ($\theta_c=\sin^{-1}(c_1/c_2)$), as the $\theta_1$ when the $\theta_2$ in FIG. 1B is 90°. In the case of rubber or bakelite, $\theta_c$ =approximately 22°. From the viewpoint of reducing the stress transmission due to elastic wave, it is preferable that $\theta_c\leq\theta_1$. Therefore, by arranging the intermediate plate 5 between the elastic bodies 4 in an inclined manner, setting the anti-vibration device to a triple-layer structure, and increasing the angle $\theta_1$, the stress transmission from the first mounting member 2 to the second mounting member 3 is suppressed to a small value.

Therefore, by arranging the intermediate plate 5 between the elastic bodies 4 in an inclined manner, setting the anti-vibration device to a triple-layer structure, and simultaneously setting the acoustic impedance $Z_2$ of the intermediate plate 5 larger than the acoustic impedance $Z_1$ of the elastic bodies 4 and enlarging the angle $\theta_1$, the stress transmission from the first mounting member 2 to the second mounting member 3 is suppressed to a small value.

The acoustic impedance $Z_2$ of the intermediate plate 5 is preferably selected from those satisfying $Z_2>1e^6$. In the following Table 1, materials with an acoustic impedance higher than rubber are described exemplarily.

[Table 1]

| Material | Density $\rho$ (kg/m$^3$) | Sound velocity c (m/s) | Z (acoustic impedance) $\times10^6$(kg/m$^2\cdot$s) |
|---|---|---|---|
| Al | 2700 | 3030 | 8.17 |
| Fe | 7860 | 3220 | 25.3 |
| Cu | 8930 | 4490 | 40.14 |
| Pb | 11300 | 6910 | 7.81 |
| Mg | 1740 | 3150 | 5.48 |
| C (graphite) | 2250 | 1200 | 2.71 |
| C (diamond) | 3520 | 1140 | 40.14 |
| Al$_2$O$_3$ | 3970 | 6620 | 26.28 |
| MgO | 3580 | 6000 | 21.48 |

In the present embodiment, further, high frequency vibration is reduced via damping.

FIGS. 3A and 3B show the results obtained by performing analysis via finite element method (FEM) to the anti-vibration device 1 as illustrated in FIG. 1A, when the damping ratio $\zeta$ of the intermediate plate 5 is set to $\zeta=0$ and impact

(impulse input) is applied to the first mounting member 2, where FIG. 3A is a graph obtained via transient response analysis on the reaction force transmitted to the output (the second mounting member 3) side of the anti-vibration device 1, and FIG. 3B is a graph obtained via transient response analysis on the frequency of the vibration transmitted to the second mounting member 3 side.

In this case, as illustrated in FIG. 3A, the reaction force is larger than the FIGS. 4A to 6A mentioned below, and as illustrated in FIG. 3B, the frequency distribution of approximately 1000 Hz to 2000 Hz is large. Moreover, the frequency distribution of approximately 4000 Hz to 5000 Hz are scattered as well.

FIGS. 4A and 4B show the results obtained by performing analysis via finite element method (FEM) to the anti-vibration device 1 as illustrated in FIG. 1A, when the damping ratio $\zeta$ of the intermediate plate 5 is set to a damping ratio corresponding to iron $\zeta$=0.0005 and impact (impulse input) is applied to the first mounting member 2, where FIG. 4A is a graph obtained via transient response analysis on the reaction force transmitted to the second mounting member 3, and FIG. 4B is a graph obtained via transient response analysis on the frequency of the vibration transmitted to the second mounting member 3 side.

In this case as well, as illustrated in FIG. 4A, the reaction force when impact is input is still large, and as illustrated in FIG. 4B, the frequency distribution of approximately 1000 Hz to 2000 Hz is large. Moreover, the frequency distribution of approximately 4000 Hz to 5000 Hz are scattered as well.

FIG. 5A and 5B show the results obtained by performing analysis via finite element method (FEM) to the anti-vibration device 1 as illustrated in FIG. 1A, when the damping ratio $\zeta$ of the intermediate plate 5 is set to a damping ratio corresponding to general-purpose resin $\zeta$=0.02 and impact (impulse input) is applied to the first mounting member 2, where FIG. 5A is a graph obtained via transient response analysis on the reaction force transmitted to the second mounting member 3 side, and FIG. 5B is a graph obtained via transient response analysis on the frequency of the vibration transmitted to the second mounting member 3 side.

In this case as well, as illustrated in FIG. 5A, the reaction force is reduced, and as illustrated in FIG. 5B, the frequency distribution of approximately 1000 Hz to 2000 Hz and around 2500 Hz is reduced. Moreover, the frequency distribution of approximately 4000 Hz to 5000 Hz is significantly reduced.

FIGS. 6A and 6B show the results obtained by performing analysis via finite element method (FEM) to the anti-vibration device 1 as illustrated in FIG. 1A, when the damping ratio $\zeta$ of the intermediate plate 5 is set to a damping ratio corresponding to a maximum damping ratio of resin $\zeta$=0.1 and impact (impulse input) is applied to the first mounting member 2, where FIG. 6A is a graph obtained via transient response analysis on the reaction force transmitted to the second mounting member 3 side, and FIG. 6B is a graph obtained via transient response analysis on the frequency of the vibration transmitted to the second mounting member 3 side.

In this case as well, as illustrated in FIG. 6A, the reaction force is reduced as compared to FIG. 3A and FIG. 4A, and as illustrated in FIG. 6B, the frequency distribution of approximately 1000 Hz to 2000 Hz and around 2500 Hz is reduced. Moreover, the frequency distribution of approximately 4000 Hz to 5000 Hz is further significantly reduced.

Here, the damping ratio $\zeta$ can be calculated according to the following general formula (6) as a Rayleigh damping.

$$\zeta=[(\alpha/\omega_i)+\beta\cdot\omega_i)]/2=\eta/2 \qquad \cdots(6)$$

$$\omega_i=2\pi f_i \qquad \cdots(7)$$

$\omega_i$: angular frequency, $\alpha,\beta$: coefficient, i: the $i_{th}$ eigenmode, $\eta$: loss factor, $f_i$: frequency [Hz]

Here, the anti-vibration device 1 according to the present embodiment is further described in details by referring to FIG. 1C.

The anti-vibration device 1 according to the present embodiment has an acoustic impedance $Z_2$ of the intermediate plate 5 larger than the elastic bodies 4, and the perpendicular line O of the intermediate plate 5 is arranged between the elastic bodies 4 in a manner inclined at an angle $\theta_1$ ($0°<\theta_1<90°$) with respect to the vibration input direction. Therefore, when high frequency vibration is input into the first mounting member 2, among the vibration input into the elastic bodies 4, at least the high frequency vibration acts as wave, and is refracted and transmits through the intermediate plate 5, or is reflected on the surface of the intermediate plate 5. Therefore, according to the anti-vibration device 1 according to the present embodiment, without using an intermediate mass formed of two intermediate members between the elastic bodies 4, high frequency vibration is reduced by reflecting and refracting the high frequency vibration on the boundary surface of the elastic bodies 4 and the intermediate plate 5. Moreover, since an intermediate mass formed of two intermediate members similarly as a conventional anti-vibration device is unnecessary, increase of the weight can be suppressed.

In addition, in the anti-vibration device 1 according to the present embodiment, since the intermediate plate 5

has a damping ratio $\zeta=0.02$ or more, the high frequency vibration is damped by being refracted and transmitting through the intermediate plate 5. Therefore, according to the anti-vibration device 1 according to the present embodiment, by setting the damping ratio of the intermediate plate 5 to $\zeta=0.02$ or more, the high frequency vibration is further reduced.

The anti-vibration device 1 according to the present embodiment preferably satisfies $0°<\theta_1\leq45°$. In that case, it is possible to prevent peeling of the elastic bodies 4 during vibration input due to the state where the intermediate plate 5 is approximately orthogonal between the elastic bodies 4, and to simultaneously reduce the high frequency vibration.

Therefore, according to the anti-vibration device 1 according to the present embodiment, it is possible to provide a novel anti-vibration device capable of reducing high frequency vibration. Here, the intermediate plate 5 may be of various shapes, as long as arranged between the elastic bodies 4 in a manner crossing the vibration input direction and connected to the elastic bodies 4. The intermediate plate 5 is exemplified as a V-shaped roof-like plate material having a linear apex formed by connecting respectively one side of two plate-like portions, each plate-like portion inclined away from the apex with respect to the vibration input direction, where the apex is connected to the elastic bodies 4 so as to be arranged to the vibration input side; an umbrella-like or bowl-like plate material having a plate-like portion inclined from one apex away with respect to the vibration input direction so as to form a conical or pyramidal shape, where the apex is connected to the elastic bodies 4 so as to be arranged on the vibration input side, etc.

EXAMPLES

[Example 1]

1. Test object (Example 1)

The anti-vibration device of FIG. 1, where the intermediate plate is located at an angle $\theta_1 =45°$.

    (1) First mounting member
    Dimensions: 70W$\times$70D$\times$9H (mm)
    Material: aluminum alloy
    (2) Second mounting member
    Dimensions: 120W$\times$85D$\times$9H (mm)
    Material: aluminum alloy
    (3) Elastic bodies
    Dimensions: 40W$\times$40D$\times$35H (mm)
    Material: rubber
    (4) Intermediate plate
    Dimensions: 100W$\times$100D$\times$5H (mm)
    Material: bakelite

2. Devices used

    (1) Hitting device: Electric hammer (5800SL, made by DYTRAN)
    (2) Reaction force measurement device: load meter (9129AA, made by Kistler Japan)

3. Experimental method

By hitting the first mounting member of the anti-vibration device once by using the electric hammer, the reaction force when inputting impulse into the anti-vibration device was measured.

[Comparative Example 1]

1. Test object (Comparative Example 1)

The anti-vibration device of FIG. 1, except that the intermediate plate is removed, leaving merely the elastic bodies.

2. Devices used

Same as above

3. Experimental method

Same as above

FIGS. 7A-7C show the experimental results of Example 1, where FIG. 7A is a graph obtained by measuring the change over time of the impact force input into Example 1, FIG. 7B is a graph obtained by measuring the change over time of the reaction force transmitted to the output (the second mounting member 3) side of Example 1, and FIG. 7C is a graph obtained by performing transient response analysis to the frequency of the vibration transmitted to the second mounting member 3 side of Example 1.

With respect to this, FIGS. 8A-8C show the experimental results of Comparative Example 1, where FIG. 8A is a graph obtained by measuring the change over time of the impact force input into Comparative Example 1, FIG. 8B is a graph obtained by measuring the change over time of the reaction force transmitted to the output (the second mounting member) side of Comparative Example 1, and FIG. 8C is a graph obtained by performing transient response analysis to the frequency of the vibration transmitted to the second mounting member side of Comparative Example 1.

Comparing FIGS. 7A-7C and FIGS. 8A-8C, it is understood that although Example 1 and Comparative Example 1 have the same force when impulse was input (FIGS. 7A, 8A), Example 1 (FIG. 7B) has a reduced number of repetitions of the reaction force as compared to Comparative Example 1 (FIG. 8B). Moreover, form the results of transient response analysis, it is understood that Example 1 (FIG. 7C) has a reduced frequency distribution of approximately 1000 Hz to 2000 Hz as compared to Comparative Example 1 (FIG. 8C).

This disclosure is effective for suppressing high frequency vibration, in particular, vibration of a frequency of 1000 Hz or more. The following Table 2 shows the measured values and the calculated values of Example 1 and Comparative Example 1.

[Table 2]

| Material | Density $\rho$ (kg/m$^3$) | Sound velocity c (m/s) | Elastic modulus E (GPa) | Z (acoustic impedance) $\times 10^6$ (kg/m$^2\cdot$s) |
|---|---|---|---|---|
|  | Measured value | Measured value | Calculated value ($(E/\rho)^{1/2}$) | Calculated value ($\rho\cdot$c) |
| Rubber | 1160 | 1560 | 3 | 1.8 |
| Polyethylene | 960 | 2300 | 5 | 2.0 |
| Bakelite | 1400 | 2830 | 10 | 3.9 |

As clarified from the experimental results of FIG. 7, by having an intermediate plate formed of a resin with an acoustic impedance $Z_2$ larger than rubber, and arranging the perpendicular line O of the intermediate plate 5 between the elastic bodies 4 at an angle $\theta_1$ ($0°<\theta_1<90°$) with respect to the vibration input direction, it is possible to reduce high frequency vibration.

INDUSTRIAL APPLICABILITY

This disclosure can be applied as anti-vibration device using elastic bodies, in particular, one for the purpose of suppressing high frequency vibration.

REFERENCE SIGNS LIST

1:     anti-vibration device
2:     first mounting member
3:     second mounting member
4:     elastic body
5:     intermediate plate
$\theta_1$:     angle (incident angle)

**Claims**

1.  An anti-vibration device (1) comprising:

    elastic bodies (4) into which vibration is input; and
    an intermediate plate (5) arranged between the elastic bodies (4) in a manner crossing a vibration input direction and connected to the elastic bodies (4), wherein

    the intermediate plate (5) has an acoustic impedance ($Z_2$) larger than the elastic bodies (4) and is arranged between the elastic bodies (4) while a perpendicular line (O) of the intermediate plate (5) is inclined with respect to the vibration input direction at an angle $\theta_1$ ($0°<\theta_1<90°$), **characterized in that** the intermediate plate (5) has a damping ratio ($\zeta$) of 0.02 or more.

2.  The anti-vibration device (1) according to claim 1, wherein $0°<\theta_1\leq45°$ is satisfied.

**Patentansprüche**

1.  Antivibrationsvorrichtung (1), umfassend:

    elastische Körper (4), in die Vibration eingegeben wird; und
    eine Zwischenplatte (5), die zwischen den elastischen Körpern (4) so angeordnet ist, dass sie eine Vibrationseingangsrichtung kreuzt und mit den elastischen Körpern (4) verbunden ist, wobei

    die Zwischenplatte (5) eine akustische Impedanz ($Z_2$) hat, die größer ist als die elastischen Körper (4), und zwischen den elastischen Körpern (4) angeordnet ist, während eine senkrechte Linie (O) der Zwischenplatte (5) in Bezug auf die Vibrationseingangsrichtung in einem Winkel $\theta_1$ ($0°<\theta_1<90°$) geneigt ist, **dadurch gekennzeichnet, dass** die Zwischenplatte (5) ein Dämpfungsverhältnis ($\zeta$) von 0,02 oder mehr aufweist.

2.  Antivibrationsvorrichtung (1) nach Anspruch 1, wobei $0°<\theta_1\leq45°$ erfüllt ist.

**Revendications**

1.  Dispositif anti-vibration (1) comprenant :

    des corps élastiques (4) dans lesquels est introduite une vibration ; et
    un plateau intermédiaire (5) agencé entre les corps élastiques (4) de manière qu'il traverse une direction d'introduction de la vibration, et connecté aux corps élastiques (4), dans lequel

    le plateau intermédiaire (5) a une impédance acoustique ($Z_2$) supérieure aux corps élastiques (4) et est agencé entre les corps élastiques (4), tandis qu'une ligne perpendiculaire (O) du plateau intermédiaire (5) est inclinée par rapport à la direction d'introduction de la vibration à un angle $\theta_1$ ($0°<\theta_1<90°$), **caractérisé en ce que** le plateau intermédiaire (5) présente un taux d'amortissement ($\zeta$) de 0,02 ou plus.

2.  Dispositif anti-vibration (1) selon la revendication 1, dans lequel $0°<\theta_1\leq45°$ est satisfait.

# FIG. 1A

# FIG. 1B

# FIG. 1C

## FIG. 2A

## FIG. 2B

## FIG. 2C

*FIG. 3A*

*FIG. 3B*

*FIG. 4A*

*FIG. 4B*

13

## FIG. 5A

## FIG. 5B

FIG. 6A

FIG. 6B

*FIG. 7A*

*FIG. 7B*

*FIG. 7C*

*FIG. 8A*

*FIG. 8B*

*FIG. 8C*

**REFERENCES CITED IN THE DESCRIPTION**

**Patent documents cited in the description**

- US 2007090269 A

- JP 2000046098 A